# EUROPÄISCHE PATENTSCHRIFT

(11) **EP 2 017 524 B1**
(45) Veröffentlichungstag und Bekanntmachung des Hinweises auf die Patenterteilung: **25.12.2019**
(21) Anmeldenummer: 08012174.2
(22) Anmeldetag: 05.07.2008
(51) Int. Cl.: G01V 8/20

(54) **Lichtgitter**
Light grid
Barrière lumineuse

(30) Priorität: 18.07.2007 DE 102007033766
(43) Veröffentlichungstag der Anmeldung: 21.01.2009
(73) Patentinhaber: Leuze electronic GmbH + Co. KG, 73277 Owen/Teck (DE)
(72) Erfinder: Lohmann, Lutz, 82140 Olching (DE); Haberer, Hermann, 81379 München (DE); Rauscher, Thorsten, 81379 München (DE)
(74) Vertreter: Ruckh, Rainer Gerhard

(56) Entgegenhaltungen:
- EP-A1- 1 353 196
- EP-A2- 1 793 244
- DE-A1-102005 030 829
- DE-U1- 29 500 873
- US-A- 5 243 183

## Beschreibung

Die Erfindung betrifft ein Lichtgitter gemäß dem Oberbegriff des Anspruchs 1.

Derartige Lichtgitter werden insbesondere im Bereich des Personenschutzes eingesetzt, wobei mit diesen als Überwachungsbereich ein Gefahrenbereich an einem von einer Maschine gebildeten Arbeitsmittel überwacht wird. Ein für derartige Überwachungsaufgaben eingesetztes Lichtgitter ist aus der DE 299 20 715 U1 bekannt. Das Lichtgitter umfasst eine Mehrfachanordnung von Lichtschranken. Wird mit diesem Lichtgitter ein Objekt oder eine Person detektiert, wird in dem Lichtgitter eine Objektmeldung generiert, welche zum Abschalten der Maschine führt. Dadurch erfüllt das Lichtgitter seine Sicherheitsfunktion, das mit diesem erfasst wird, wenn sich eine Person in den Gefahrenbereich begibt. Jedoch würde auch ein Eindringen eines mit der Maschine zu bearbeitenden Werkstücks in den Gefahrenbereich zu einer Objektmeldung in dem Lichtgitter führen, welche dann ein Abschalten der Maschine zur Folge hätte. Da es sich bei dem zu bearbeitenden Werkstück um ein nicht sicherheitskritisches Objekt handelt, ist ein Abschalten der Maschine bei dessen Detektion innerhalb des Gefahrenbereichs unnötig und daher unerwünscht.

Um ein derartiges unnötiges Abschalten der Maschine zu vermeiden, sind bei dem Lichtgitter der DE 299 20 715 U1 zusätzlich zu der Lichtschrankenanordnung am Eingang beziehungsweise Ausgang des Gefahrenbereichs sogenannte Mutingsensoren vorgesehen, die eine Unterscheidung zwischen Personen oder allgemein sicherheitskritischen Objekten und zulässigen Gegenständen als nicht sicherheitskritischen Objekten ermöglichen. Wird ein zulässiger Gegenstand detektiert, so erzeugen die Mutingsensoren ein Mutingsignal, das heißt ein Überbrückungssignal, das bewirkt, dass trotz einer Unterbrechung der Lichtschranken des Lichtgitters die Abschaltfunktion vorübergehend deaktiviert ist, das heißt die Maschine nicht abgeschaltet wird. Wird hingegen eine der Lichtschranken unterbrochen und erzeugen die Mutingsensoren kein Überbrückungssignal, so wird die zu überwachende Maschine abgeschaltet.

Nachteilig hierbei ist, dass die von Reflexionslichtschranken gebildeten Mutingsensoren als weitere Sensoren zum Lichtgitter einen erheblichen konstruktiven Aufwand bedingen und damit auch eine erhebliche Erhöhung des Kostenaufwands bei der Realisierung der Gefahrenbereichabsicherung verursachen. Dieser Nachteil wird dadurch noch verstärkt, dass sowohl am Eingang und am Ausgang jeweils ein Paar von Mutingsensoren vorgesehen sein muss, damit die zulässigen Objekte von nicht zulässigen Objekten unterschieden werden können. Die EP 1 353 196 A1 betrifft ein Verfahren zur Erfassung von zwei oder mehr beweglichen Objekten in einem Überwachungsbereich, wobei ein horizontales Lichtgitter mit einer Mehrzahl von zueinander parallelen Lichtschranken verwendet wird. Damit sich mehrere Objekte gleichzeitig durch das Schutzfeld bewegen können, ohne die Überwachungsfunktion zu deaktivieren, werden in Kombination die Vorgabe eines Eintrittsbereiches für die Objekte, die Größe der Objekte sowie der Abstand bzw. die Abstände zwischen den Objekten überwacht. Bei Nichterfüllung wenigstens eines dieser drei Kriterien wird ein Steuersignal abgegeben und beispielsweise die Anlage abgestellt. Die Erfindung betrifft auch ein Lichtgitter zur Durchführung dieses Verfahrens.

Die US 5 243 183 A betrifft ein Lichtgitter mit einer Reihenanordnung von Lichtstrahlen emittierenden Sendern und einer Reihenanordnung von Lichtstrahlen empfangenden Empfängern zu Überwachung eines Schutzfelds. Bei freiem Schutzfeld gelangen die von den Sendern emittierten Lichtstrahlen ungehindert zu zugeordneten Empfängern. Objektdetektionen erfolgen dadurch, dass in einer Auswerteeinheit Strahlunterbrechungen eines oder mehreren Lichtstrahlen registriert werden. Bei dieser Objektdetektion wird zwischen zulässigen und unzulässigen Objekten unterschieden.

Die DE 10 2005 030 829 A1 betrifft ein Verfahren zum Betrieb eines Lichtgitters mit verschiedenen Verfahrensschritten und Lichtgitter mit einer Sende- und Empfangseinheit. Ein Aussenden einer Mehrzahl von linear nebeneinander beabstandeten und parallel zueinander verlaufenden Lichtstrahlen mittels der sich linear erstreckenden Sendeeinheit und Empfangen dieser Lichtstrahlen mit der sich parallel zur Sendeeinheit erstreckenden Empfangseinheit. Zwischen der Sende- und Empfangseinheit wird dadurch ein Schutzfeld definiert. Das Schutzfeld wird in einem Winkel zu einer Bewegungsrichtung von in das Schutzfeld eindringender Objekte angeordnet, wobei der Winkel zwischen 45° und 135° liegt, ausgenommen 90°, so dass die Lichtstrahlen sequentiell nacheinander von dem Objekt unterbrochen werden. Aufgrund dieser sequentiellen Unterbrechung wird die Geschwindigkeit des Objektes bestimmt und wenigstens eine Ausdehnung von in Bewegungsrichtung wenigstens einem hervorstehenden Teil des Objekts. Die erfasste Ausdehnung wird mit zuvor abgespeicherten Referenzwerten verglichen und ein Schaltsignal in Abhängigkeit des Vergleichsergebnisses erzeugt.

Die DE 295 00 873 U1 betrifft ein Lichtgitter mit einer Reihe von Lichtsendern und diesem zugeordneten Lichtempfängern, mittels derer ein Schutzfeld zyklisch abgetastet wird. Die Lichtsender sind zu vorbestimmten Zeiten für eine bestimmte Zeitdauer eingeschaltet. In bestimmten Zeiten wird an einem Lichtempfänger zumindest von einem Lichtsender Licht erwartet. Die von einem Gegenstand im Schutzfeld hervorgerufene Unterbrechung eines Lichtstrahls und das Ausbleiben eines elektrischen Ausgangssignals an diesem Lichtempfänger hat zur Folge, dass ein Warn- oder Alarmsignal abgeleitet werden kann. In Abhängigkeit von einem oder mehreren an vorbestimmten Stellen oder in vorbestimmten Bereichen des Schutzfeldes stattfindenden, in einer Steuer-Auswerteelektronik abgespeicherten Ereignissen, die eine Unterbrechung eines Lichtbündels hervorrufen, wird das Ausbleiben von Licht nicht zur Auslösung eines Warn- oder Abschaltsignals verwendet.

Der Erfindung liegt die Aufgabe zugrunde eine sensorüberwachte Gefahrenbereichsüberwachung bereitzustellen, mit welcher mit möglichst geringem Aufwand eine sichere Überwachung eines Gefahrenbereichs an einem Arbeitsmittel durchführbar ist, ohne dabei die Verfügbarkeit des Arbeitsmittels unnötig einzuschränken.

Zur Lösung dieser Aufgabe sind die Merkmale des Anspruchs 1 vorgesehen. Vorteilhafte Ausfiihrungsformen und zweckmäßige Weiterbildungen der Erfindung sind in den Unteransprüchen beschrieben.

Das erfindungsgemäße Lichtgitter dient zur Erfassung von Objekten in einem Überwachungsbereich und umfasst ein Anzahl von Strahlachsen, welche jeweils von einem Sendelichtstrahlen emittierenden Sender und einem zugeordneten Empfänger gebildet sind. Die Längsachse des Lichtgitters ist um einen Neigungswinkel zur Vertikalen geneigt. Bei freiem Überwachungsbereich sind die Strahlachsen nicht unterbrochen und bei einem Objekteingriff ist im Überwachungsbereich wenigstens eine Strahlachse unterbrochen. Weiterhin umfasst das Lichtgitter eine Auswerteeinheit, mittels derer bei Eindringen eines sicherheitskritischen Objekts in den Überwachungsbereich eine Objektmeldung generierbar ist. In der Auswerteeinheit ist ein nichtsicherheitskritisches Objekt bei Passieren des Überwachungsbereichs dadurch identifizierbar, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind. Während der Einlaufphase läuft die Vorderkante des nichtsicherheitskritischen Objekts in den Überwachungsbereich ein und während der Durchlaufphase wird das nichtsicherheitskritische Objekt in seiner gesamten Höhe erfasst. Bei einem identifizierten nichtsicherheitskritischen Objekt wird in der Auswerteeinheit ein Mutingsignal generiert. Durch die Erfassung des nichtsicherheitskritischen Objekts erfolgt in den einzelnen Muting-Phasen das Abschalten des Mutingsignals zeitaufgelöst.

Mit dem erfindungsgemäßen Lichtgitter wird somit eine Überwachungsfunktion derart realisiert, dass bei Erfassung eines sicherheitskritischen Objekts im Überwachungsbereich eine Objektmeldung generiert wird. Das so ausgebildete Lichtgitter kann damit insbesondere in sicherheitstechnischen Anwendungen, insbesondere im Bereich des Personenschutzes eingesetzt werden, wobei das Lichtgitter hierzu als Sicherheitssensor ausgebildet ist, der hinsichtlich seines Aufbaus die relevanten Sicherheitsnormen erfüllt. In derartigen sicherheitstechnischen Anwendungen wird mit dem Lichtgitter als Überwachungsbereich generell ein Gefahrenbereich eines Arbeitsmittels wie einer Maschine oder Anlage überwacht. Dabei wird mit dem Lichtgitter ein Objektfeststellungssignal generiert, welches zur Steuerung des Arbeitsmittels dient. Wird mittels des Lichtgitters ein freier Überwachungsbereich registriert und ein entsprechendes Objektfeststellungssignal generiert, so wird durch dieses Objektfeststellungssignal das Arbeitsmittel aktiviert, das heißt in Betrieb gesetzt. Wird mittels des Lichtgitters ein sicherheitskritisches Objekt im Überwachungsbereich registriert, so wird als Objektfeststellungssignal eine Objektmeldung generiert, die zum Abschalten des Arbeitsmittels führt um so Gefährdungen von Personen im Gefahrenbereich zu vermeiden.

Ein wesentlicher Vorteil des erfindungsgemäßen Lichtgitters besteht darin, dass mit diesem als Zusatzfunktion ein Muting durchführbar ist. Damit können mit dem Lichtgitter selbst, das heißt ohne zusätzliche Mutingsensoren nichtsicherheitskritische Objekte identifiziert werden, deren Eindringen in den Überwachungsbereich und damit in den Gefahrenbereich des Arbeitsmittels unkritisch, das heißt nicht sicherheitsgefährdend ist. Bei Erkennen eines derartigen nichtsicherheitskritischen Objekts wird mittels des Lichtgitters ein Mutingsignal generiert. Dieses Mutingsignal stellt ein Überbrückungssignal derart dar, dass das Lichtgitter stummgeschaltet wird, so dass während des aktivierten Mutings ein Objekteingriff in dem Überwachungsbereich nicht zur Generierung einer Objektmeldung und damit nicht zum Stillsetzen des Arbeitsmittels führt. Dadurch wird die Verfügbarkeit des Arbeitsmittels signifikant erhöht, da dieses nur abgeschaltet wird, wenn ein sicherheitskritisches Objekt in den Überwachungsbereich eindringt, nicht jedoch ein nichtsicherheitskritisches Objekt.

Erfindungsgemäß erfolgt die Erkennung eines nichtsicherheitskritischen Objekts während dessen Passieren des Überwachungsbereichs in unterschiedlichen Muting-Phasen, nämlich einer Einlaufphase, in der die Vorderkante des nichtsicherheitskritischen Objekts in den Überwachungsbereich einläuft, einer Durchlaufphase, in der das nichtsicherheitskritische Objekt in seiner gesamten Höhe vom Lichtgitter erfasst wird, und vorteilhaft zudem in einer Auslaufphase, in der die Hinterkante aus dem Überwachungsbereich ausläuft. Die Erkennung des jeweiligen nichtsicherheitskritischen Objekts erfolgt dadurch, dass in der Auswerteeinheit für die einzelnen Muting-Phasen spezifische, das nichtsicherheitskritische Objekt kennzeichnende Objektmerkmale hinterlegt sind. Während des Durchlaufs des nichtsicherheitskritischen Objekts durch den Überwachungsbereich werden während der einzelnen Muting-Phasen fortlaufend die durch das nichtsicherheitskritische Objekt unterbrochenen Strahlachsen des Lichtgitters registriert und derart ausgewertet, dass geprüft wird, ob in die einzelnen Muting-Phasen die Objektmerkmale erfüllt sind, das heißt bei dem detektierten Objekt erkannt werden.

Durch die Hinterlegung spezifischer im allgemeinen für die einzelnen Muting-Phasen unterschiedlicher Objektmerkmale wird eine sichere Erfassung von nichtsicherheitskritischen Objekten gewährleistet. Dabei ist besonders vorteilhaft, dass zur Identifizierung eines nichtsicherheitskritischen Objekts kein Einlernvorgang notwendig ist, um dessen Geometrie zu erfassen, damit diese im nachfolgenden Arbeitsbetrieb des Lichtgitters wieder erkannt werden können. Vielmehr reichen die für die einzelnen Muting-Phasen definierten Objektmerkmale aus, um das nichtsicherheitskritische Objekt sicher zu erkennen.

Ein weiterer wesentlicher Vorteil dieser Auswertung besteht darin, dass nicht nur ein nichtsicherheitskritisches Objekt als solches, das heißt anhand seiner Geometrie erkannt wird, sondern auch dessen Geschwindigkeit und Bewegungseinrichtung erfasst und damit auch kontrolliert werden kann.

Weiterhin ist vorteilhaft, dass durch die Erfassung des nichtsicherheitskritischen Objekts in den einzelnen Muting-Phasen auch die Aufhebung des Mutings, das heißt das Abschalten des Mutingsignals entsprechend zeitaufgelöst erfolgen kann. So kann das Muting bereits dann aufgehoben werden, wenn das nichtsicherheitskritische Objekt nicht in der ersten Muting-Phase, das heißt Einlaufphase erkannt wird. Alternativ kann das Mutingsignal erst dann aufgehoben werden, wenn das nichtsicherheitskritische Objekt nicht in allen Muting-Phasen erkannt wurde.

Weiterhin sind mit dem erfindungsgemäßen Lichtgitter weitere Mutingfunktionen wie das vorzeitige Mutingende sowie eine Freifahrfunktion, dem sogenannten Override, realisierbar.

Bei dem vorzeitigen Mutingende wird das Muting vorzeitig beendet, das heißt das Mutingsignal zurückgenommen und dadurch das Lichtgitter wieder aktiviert, wenn bei Passieren des nichtsicherheitskritischen Objekts anhand der registrierten Mutter der unterbrochenen Strahlachsen des Lichtgitters festgestellt wird, dass die Objektmerkmale in wenigstens einer der Muting-Phase für die nichtsicherheitskritischen Objekte nicht mehr erkannt werden. Bei einer derartigen Abweichung wird in der Auswerteeinheit ein Fehlersignal generiert, durch welches das Mutingsignal aufgehoben wird. Damit können Gefahrenfälle derart, dass neben dem nichtsicherheitskritischen Objekt ein weiteres, gegebenenfalls sicherheitskritisches Objekt, den Überwachungsbereich passiert, aufgedeckt werden. Um Personengefährdungen zu vermeiden, wird durch die Aufhebung des Mutingsignals das Lichtgitter aktiviert, dass dann eine Objektmeldung generiert und so das Arbeitsmittel stillsetzt.

In diesem Fall befindet sich bei Stillsetzen des Arbeitsmittels des nichtsicherheitskritischen Objekts noch im Überwachungsbereich. Die Förderstrecke, die das nichtsicherheitskritische Objekt bewegt, ist dann ebenfalls stillgelegt. Dies aber würde bedeuten, dass bei aktivierendem Lichtgitter dieses das nichtsicherheitskritische Objekt als unzulässigen Objekteingriff fortlaufend erkennt und so ein Wiederanlaufen der Anlage bestehend aus Arbeitsmittel und Förderstrecke verhindert. Um in diesem Fall einen Wiederanlauf zu erzielen, ist die Freifahrfunktion, das heißt das Override, vorgesehen. Bei dieser Freifahrfunktion hebt eine Bedienperson manuell die Überwachungsfunktion des Lichtgitters auf, so dass das nichtsicherheitskritische Objekt aus dem Überwachungsbereich ausfahren kann. Während des Ausfahrens muss die Bedienperson selbst kontrollieren, dass kein sicherheitskritisches Objekt, insbesondere keine Person in den Überwachungsbereich eindringt. Nach Ausfahrt des nichtsicherheitskritischen Objekts aus dem Lichtgitter wird das Lichtgitter wieder aktiviert.

Die Erfindung wird im Nachstehenden anhand der Zeichnungen erläutert. Es zeigen:
- Figur 1:: Schematische Darstellung des Aufbaus eines Lichtgitters.
- Figur 2:: Lichtgitter gemäß Figur 1 an einer Förderstrecke mit einem in einer Bewegungsrichtung geförderten, vor dem Lichtgitter angeordneten nichtsicherheitskritischen Objekt.
- Figur 3:: Anordnung gemäß Figur 2 mit dem nichtsicherheitskritischen Objekt während der Einlaufphase in den vom Lichtgitter gemäß Figur 1 überwachten Überwachungsbereich.
- Figur 4:: Anordnung gemäß Figur 2 mit dem nichtsicherheitskritischen Objekt während der Durchlaufphase durch den Überwachungsbereich des Lichtgitters.
- Figur 5:: Anordnung gemäß Figur 2 mit dem nichtsicherheitskritischen Objekt während der Auslaufphase aus dem vom Lichtgitter gemäß Figur 1 überwachten Überwachungsbereich.
- Figur 6:: Zeitdiagramm der unterbrochenen Strahlachsen des Lichtgitters für die einzelnen Bewegungsphasen des nichtsicherheitskritischen Objekts gemäß den Anordnungen der Figuren 2 bis 5.

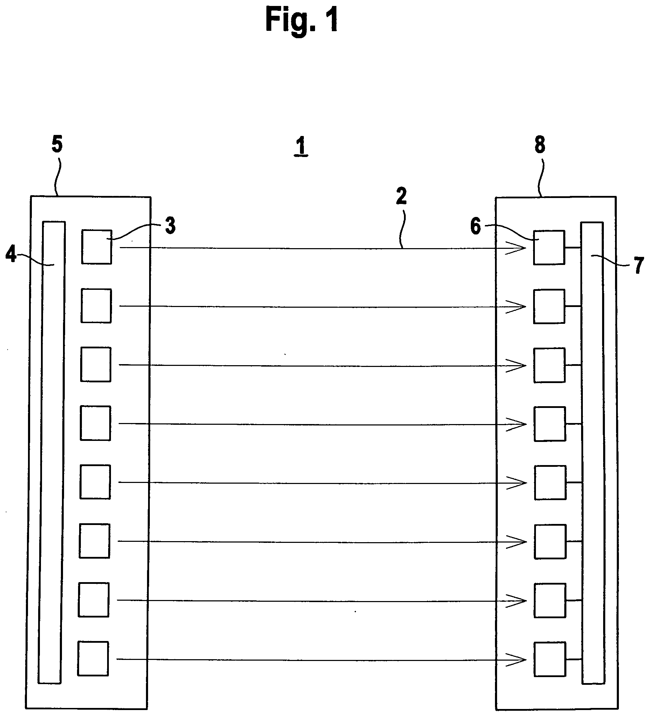

Figur 1 zeigt schematisch den Aufbau eines Lichtgitters 1, welches zur Erfassung von Objekten in einem Überwachungsbereich dient. Das Lichtgitter 1 umfasst eine Anordnung von Sendelichtstrahlen 2 emittierenden Sendern 3, die mit einer Steuereinheit 4 zyklisch einzeln nacheinander aktiviert werden. Die Sender 3 und die Steuereinheit 4 sind in einem ersten Gehäuse 5 integriert. Das Lichtgitter 1 umfasst weiter eine Anordnung von Empfängern 6 zum Empfang der Sendelichtstrahlen 2. Den Empfängern 6 ist eine Auswerteeinheit 7 zur Steuerung des Empfängerbetriebs und zur Auswertung der an den Ausgängen anstehenden Empfangssignale zugeordnet. Die Empfänger 6 und die Auswerteeinheit 7 sind in einem zweiten Gehäuse 8 integriert. Die Sendelichtstrahlen 2 werden durch nicht dargestellte Fenster in den Frontwänden der Gehäuse 5 geführt. Wie aus Figur 1 ersichtlich, sind die Sender 3 und die Empfänger 6 in separaten Gehäusen 5 an gegenüberliegenden Rändern des Überwachungsbereichs angeordnet. Dabei ist jedem Sender 3 jeweils ein Empfänger 6 zugeordnet, so dass bei freiem Überwachungsbereich die vom Sender 3 emittierten Sendelichtstrahlen 2 als Empfangslichtstrahlen auf den Empfänger 6 treffen.

Jeweils ein Sender 3 und der zugeordnete Empfänger 6 definieren eine Strahlachse des Lichtgitters 1, wobei die Richtung der Strahlachse durch die Sendelichtstrahlen 2 des jeweiligen Senders 3 gegeben ist. Die in einer Ebene liegenden Strahlachsen des Lichtgitters 1 bilden den Überwachungsbereich. Bei einem Objekteingriff in den Überwachungsbereich wird der Strahlengang der Sendelichtstrahlen 2 wenigstens eines Senders 3, das heißt wenigstens eine Strahlachse unterbrochen.

Alternativ zu der Ausführungsform gemäß Figur 1 können die Sender 3 und Empfänger 6 auch in einem gemeinsamen Gehäuse 5 integriert sein, welches an einem Rand des Überwachungsbereichs angeordnet ist. Am gegenüberliegenden Rand des Überwachungsbereichs ist dann ein Reflektor angeordnet, wobei bei freiem Überwachungsbereich die von den Sendern 3 emittierten Sendelichtstrahlen 2 am Reflektor reflektiert und von dort auf die Empfänger 6 geführt sind.

In Abhängigkeit der Empfängersignale der Empfänger 6 wird in der Auswerteeinheit 7 als Objektfeststellungssignal ein binäres Schaltsignal generiert, dessen Schaltzustände angeben, ob sich ein Objekt im Überwachungsbereich befindet oder nicht. Im einfachsten Fall nimmt das Schaltsignal den Schaltzustand "freier Überwachungsbereich" ein, wenn keine der Sendelichtstrahlen 2 unterbrochen sind. Werden dagegen wenigstens die Sendelichtstrahlen 2 eines Senders 3 unterbrochen, nimmt das Schaltsignal den Schaltzustand "Objekt erkannt" ein, das heißt es liegt ein Objekteingriff im Überwachungsbereich vor. Das Lichtgitter 1 wird bevorzugt im Bereich des Personenschutzes eingesetzt. Um eine hierfür erforderliche fehlersichere Auswertung der Empfangssignale zu erzielen, weist die Auswerteeinheit 7 einen redundanten, zweikanaligen Aufbau auf. Vorzugsweise weist die Auswerteeinheit 7 zwei sich gegenseitig zyklisch überwachende Rechnereinheiten auf. Mit dem Lichtgitter 1 kann dann als Überwachungsbereich der Gefahrenbereich an einem Arbeitsmittel wie einer Maschine zu Zwecken des Personenschutzes überwacht werden. Dabei wird das Arbeitsmittel abgeschaltet, sobald mittels des Lichtgitters 1 ein Objekteingriff im Überwachungsbereich registriert wird, das heißt eine im Lichtgitter 1 generierte Objektmeldung führt zum Stillsetzen des Arbeitsmittels.

Um die Verfügbarkeit des Arbeitsmittels nicht unnötig einzuschränken wird mit dem Lichtgitter 1 eine Objektmeldung, die zum Abschalten des Arbeitsmittels führt, nur dann generiert, wenn es sich bei dem im Überwachungsbereich detektierten Objekt um ein sicherheitskritisches Objekt handelt. Ein Eindringen eines nichtsicherheitskritischen Objekts in dem Überwachungsbereich führt dagegen nicht zum Abschalten des Arbeitsmittels. Hierzu ist das Lichtgitter 1 mit einer Mutingfunktion ausgestattet. Diese Mutingfunktion sieht vor, dass bei Erfassung eines nichtsicherheitskritischen Objekts im Überwachungsbereich ein Mutingsignal generiert ist, welches das Lichtgitter 1 stumm schaltet, das heißt derart deaktiviert, dass die Generierung einer Objektmeldung, die zum Abschalten des Arbeitsmittels führen würde, unterdrückt wird. Diese MutingFunktion ist ständig aktiv und wird generell dann aufgehoben, das heißt abgeschaltet, wenn das nichtsicherheitskritische Objekt nicht erkannt wird.

Das nichtsicherheitskritische Objekt wird dabei während des Passierens des Überwachungsbereichs durch Registrieren der dadurch unterbrochenen Strahlachsen detektiert. Die Erfassung des nichtsicherheitskritischen Objekts erfolgt dabei getrennt in mehreren Muting-Phasen, und zwar während einer Einlaufphase, innerhalb derer die Vorderkante des nichtsicherheitskritischen Objekts in den Überwachungsbereich des Lichtgitters 1 einläuft, während einer Durchlaufphase, innerhalb derer das nichtsicherheitskritische Objekt vollständig in seiner gesamten Höhe erfasst wird, und bevorzugt auch während einer Auslaufphase, innerhalb derer die Hinterkante des nichtsicherheitskritischen Objekts aus dem Überwachungsbereich ausläuft. Dabei wird zur Identifizierung des nichtsicherheitskritischen Objekts anhand der Strahlmuster der unterbrochenen Strahlachsen untersucht, ob spezifische, für die einzelnen Muting-Phasen definierte, das nichtsicherheitskritische Objekt kennzeichnende Objektmerkmale welche in der Auswerteeinheit 7 separat für die einzelnen Muting-Phasen hinterlegt sind, erfüllt sind.

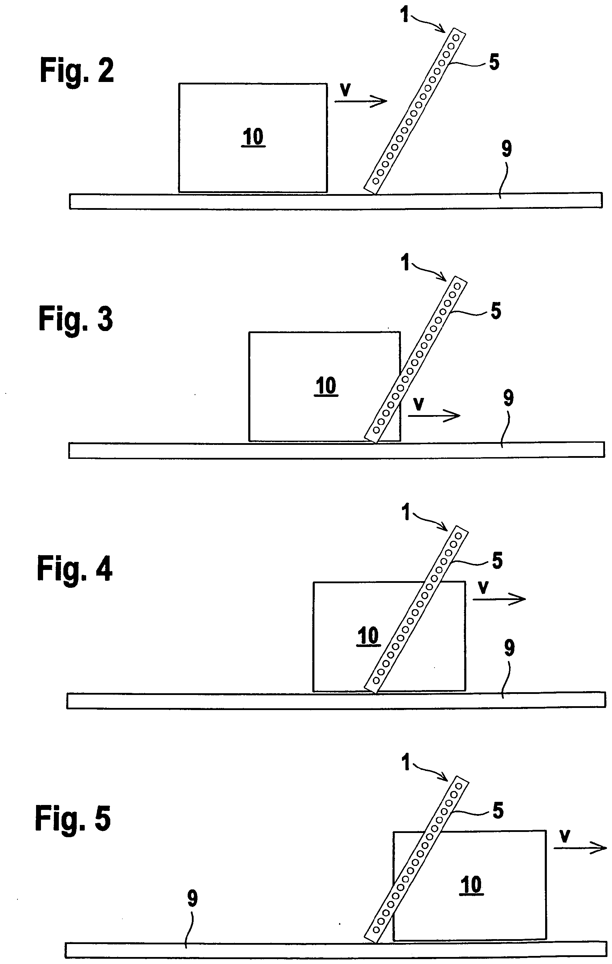

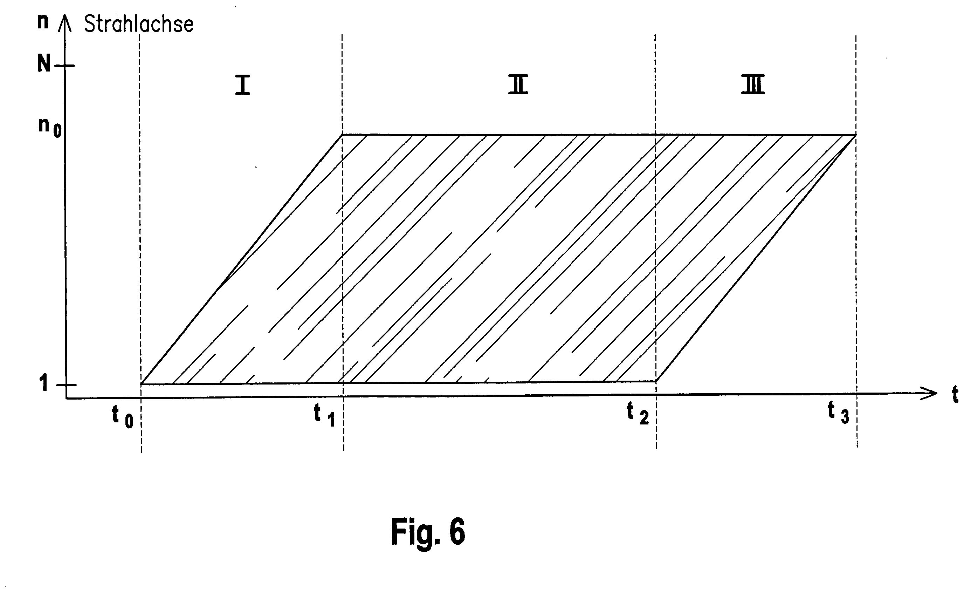

Ein spezifisches Ausführungsbeispiel hierfür zeigen die Anordnungen gemäß den Figuren 2 bis 5. Figur 6 zeigt den zeitlichen Verlauf des Musters der durch das nichtsicherheitskritische Objekt unterbrochenen Strahlachsen des Lichtgitters 1. Dort wird mit einem Lichtgitter 1 ein Gefahrenbereich im Bereich einer Förderstrecke 9 überwacht.

Die Ebene des Überwachungsbereich des Lichtgitters 1 verläuft senkrecht zur Zielebene in den Figuren 2 bis 5. Dabei sind die Gehäuse 8 des Lichtgitters 1 nicht in vertikaler Richtung ausgerichtet. Vielmehr sind die Längsachsen der Gehäuse 8 um einen Neigungswinkel zur Vertikalen geneigt. Als nichtsicherheitskritisches Objekt werden auf der Förderstrecke 9 Rollen 10, vorzugsweise Papierrollen auf denen Papierbahnen aufgerollt sind, mit einer Geschwindigkeit V in horizontaler Richtung gefördert. Die Sendelichtstrahlen 2 des Lichtgitters 1 tasten dabei die Mantelfläche der Rolle 10 ab. Diese bildet in der Projektion senkrecht zur Ebene der Strahlachsen eine Fläche mit einer rechteckigen Au-ßenkontur, wie in den Figuren 2 bis 5 dargestellt. Bei dem in Figuren 2 bis 5 dargestellten Ausführungsbeispiel ist das Lichtgitter 1 in Fahrtrichtung der Papierrolle geneigt. Alternativ kann das Lichtgitter 1 auch entgegen der Fahrtrichtung der Papierrolle geneigt sein.

Figur 2 zeigt das Lichtgitter 1 bei freiem Überwachungsbereich und mit der Rolle 10, die in Abstand vor dem Lichtgitter 1 ist, das heißt noch nicht in den Überwachungsbereich eingedrungen ist. Figur 3 zeigt die Rolle 10 in der Einlaufphase in den Überwachungsbereich. Während der Einlaufphase wird zunächst die erste unterste Strahlachse des Lichtgitters 1 unterbrochen. Ausgehend hiervon wird während der Einlaufphase eine steigende Anzahl von unterbrochenen Strahlachsen registriert, bis in der Durchlaufphase die Rolle 10 in ihrer gesamten Höhe erfasst wird (Figur 4). Schließlich vermindert sich die Zahl der unterbrochenen Strahlachsen in der Auslaufphase der Rolle 10 stetig (Figur 5), wobei zunächst die unterste Strahlachse des Lichtgitters 1 frei wird, danach zusätzlich die zweite und so weiter bis schließlich die Rolle 10 aus dem Überwachungsbereich ausgefahren ist. Bei einem entgegen der Fahrtrichtung der Papierrolle geneigten Lichtgitter 1 würde in der Einlaufphase zunächst die Oberkante der Papierrolle vom Lichtgitter erfasst werden.

Der hierbei erhaltene zeitliche Verlauf der unterbrochenen Strahlachsen ist in Figur 6 dargestellt, wobei der schraffierte Bereich den Bereich der unterbrochenen Strahlachsen bildet. Zu den Zeiten t < t₀ ist die Rolle 10 noch nicht in den Überwachungsbereich eingefahren. Die Einlaufphase ist in Figur 6 mit I gekennzeichnet. Zu Beginn der Einlaufphase bei t = t₀ wird die unterste Strahlachse (n = 1) der Lichtgitter 1 unterbrochen. Am Ende der Einlaufphase bei t = t₁ wird die Rolle 10 in ihrer gesamten Objekthöhe erfasst, so dass insgesamt n₀ der insgesamt N Strahlachsen des Lichtgitters 1 unterbrochen sind. Als Objektmerkmal für die Einlaufphase ist in der Auswerteeinheit 7 der stetige, das heißt lückenlose Anstieg der unterbrochenen Strahlachsen von 1 bis n₀ gespeichert. Zudem kann zur Kontrolle der Geschwindigkeit V der Rolle 10 die Durchlaufzeit T_{E} vorgegeben werden, innerhalb derer ausgehend von der Unterbrechung der ersten Strahlachse sämtliche der Objekthöhe entsprechenden n₀ Strahlachsen des Lichtgitters 1 unterbrochen sind. In Figur 6 ist der Fall einer fehlerfreien Detektion der Vorderflanke der Rolle 10 gezeigt, da in der Einlaufphase die Zahl der unterbrochenen Strahlachsen stetig von 1 bis n₀ ansteigt und dieser in einem Zeitintervall t₁ - t₀ erfolgt, welche innerhalb in der Auswerteeinheit 7 vorgegebener Toleranzgrenzen mit der vorgegebenen Durchlaufzeit T_{E} übereinstimmt. Um die Erkennung der Vorderflanke fehlertolerant zu gestalten, kann für den stetigen Anstieg der unterbrochenen Strahlachsen in der Einlaufphase ein gewisser Jitter zugelassen werden. Zusätzlich kann während der Einlaufphase auch die Lage der Unterkante der Rolle 10 erfasst werden. Wäre das Lichtgitter 1 entgegen der Fahrtrichtung geneigt, könnte während der Einlaufphase die Lage der Oberkante der Rolle 10 überwacht werden.

In der Durchlaufphase, das heißt im Zeitintervall zwischen t₁ und t₂ in Figur 6 wird die Rolle 10 in ihrer gesamten Höhe erkannt. Als Objektmerkmal für die Durchlaufphase ist in der Auswerteeinheit 7 zur Vorgabe der Sollhöhe der Sollwert nₛ der unterbrochenen Stahlachsen angegeben. Figur 6 zeigt wieder den fehlerfreien Fall, bei welchem die geforderte Objekthöhe erkannt wird, das heißt die Anzahl der in der Durchlaufphase registrierten unterbrochenen Strahlachsen n₀ entspricht genau dem Sollwert nₛ. Um auch in der Durchlaufphase die Erkennung des nichtsicherheitskritischen Objekts fehlertoleranter zu gestalten, können Toleranzgrenzen Δn vorgegeben werden, so dass dann als Kriterium für die Erkennung des nichtsicherheitskritischen Objekts gefordert wird, dass die aktuelle registrierte Anzahl der unterbrochenen Strahlachsen innerhalb des Intervalls [nₛ - Δn, nₛ + Δn] liegt. Dabei muss diese Bedingung während der gesamten Durchlaufphase erfüllt sein. Um die Geschwindigkeit der Rolle 10 auch während der Durchlaufphase kontrollieren zu können, kann in der Auswerteeinheit 7 als weiteres Objektmerkmal die für die Durchlaufphase geforderte Durchlaufzeit T_{D} hinterlegt sein. Dann muss die gemessene Durchlaufzeit t₂ - t₁ mit dem Sollwert T_{D} innerhalb vorgegebener Toleranzgrenzen übereinstimmen, damit das nichtsicherheitskritische Objekt als erkannt gilt.

Zusätzlich kann während der Durchlaufphase auch eine sogenannte Überwachung auf Blockfreiheit durchgeführt werden. Da die Rolle 10 ein massives Objekt ist, muss durch dieses während der Durchlaufphase immer eine ununterbrochene Folge von Strahlachsen unterbrochen sein, was in der Auswerteeinheit 7 überwacht wird.

Prinzipiell kann als weiteres Objektmerkmal überprüft werden, ob die Lage der oberen Objektkante während der Durchlaufphase konstant bleibt, das heißt ob die oberste unterbrochene Strahlachse immer wie in Figur 6 dargestellt bei n = n₀ liegt. Dieselbe Überwachung kann prinzipiell auch für die Unterkante des Objekts durchgeführt werden.

Die Objektmerkmale der Auslaufphase (Zeitintervall zwischen t₂ und t₃ in Figur 6) sind analog bei den Objektmerkmalen der Einlaufphase definiert. Dementsprechend wird für eine Erkennung der Rolle 10 als nichtsicherheitskritisches Objekt gefordert, dass die Anzahl der unterbrochenen Strahlachsen kontinuierlich von n = n₀ bis n = 0 abnimmt. Zudem kann zur Kontrolle der Geschwindigkeit der Rolle 10 geprüft werden, ob die gemessene Durchlaufzeit t₃ - t₂ mit einem Sollwert T_{A} für die Durchlaufzeit in der Auslaufphase übereinstimmt. Weiterhin kann während der Auslaufphase die Lage der Oberkante der Rolle 10 überwacht werden.

Wird anhand der in der Auswerteeinheit 7 abgespeicherten Objektmerkmale während der Einlaufphase, der Durchlaufphase und/oder der Auslaufphase anhand der Auswertung der unterbrochenen Strahlachsen das nichtsicherheitskritische Objekt als solches erkannt, so ist durch ein in der Auswerteeinheit 7 generiertes Mutingsignal das Lichtgitter 1 stumm geschaltet, das heißt es generiert keine Objektmeldung, die zu einem Stillsetzen des Arbeitsmittels, im vorliegenden Fall der Förderstrecke 9 und einer dieser zugeordneten, nicht dargestellten Maschine, führen würde.

Eine Aufhebung des Mutings kann dann erfolgen, wenn das nichtsicherheitskritische Objekt in allen drei Muting-Phasen erkannt wurde. Weiterhin kann das Muting auch bereits in der Einlaufphase oder erst in der Durchlaufphase aufgehoben werden.

Das Muting wird generell dann aufgehoben, wenn die die Geometrie des nichtsicherheitskritischen Objekts beschreibenden Objektmerkmale nicht erfüllt und, sofern in der Auswerteeinheit 7 zusätzlich definiert, die vorgegebenen Durchlaufzeiten in den Muting-Phasen nicht eingehalten werden.

Weiterhin kann bei der Anordnung des Lichtgitters 1 gemäß den Figuren 2 bis 5 auch die Bewegungsrichtung eines nichtsicherheitskritischen Objekts überwacht werden. Wie aus Figur 3 ersichtlich, wird bei einem von links in den Überwachungsbereich eintauchenden nichtsicherheitskritischen Objekt zuerst die unterste Strahlachse des Lichtgitters 1 unterbrochen. Nähert sich das Lichtgitter 1 von rechts dem Lichtgitter 1, so wird bei Eintauchen des nichtsicherheitskritischen Objekts in dem Überwachungsbereich zuerst die oberste Strahlachse n₀ unterbrochen.

Bei dem erfindungsgemäßen Lichtgitter 1 sind Standard-Mutingfunktionen, nämlich das vorzeitige Mutingende sowie eine Freifahrfunktion realisiert.

Die Funktion des vorzeitigen Mutingende sieht vor, dass bei einem durch das Eintreten eines nichtsicherheitskritischen Objekts in den Überwachungsbereich generierten Mutingsignal ein Fehlersignal dann generiert wird, wenn in der Auswerteeinheit 7 durch Auswertung der unterbrochenen Strahlachsen während des Passierens des nichtsicherheitskritischen Objekts eine Abweichung von gespeicherten Objektmerkmalen registriert wird. Durch das Fehlersignal wird das Muting-Signal aufgehoben, das Lichtgitter 1 also aktiviert.

Da damit das Lichtgitter 1 eine Objektmeldung generiert, wenn das nichtsicherheitskritische Objekt noch im Überwachungsbereich ist, wird die Anlage mit der Förderstrecke 9 stillgesetzt. Damit aber kann das nichtsicherheitskritische Objekt nicht mehr ausfahren. Um hier Abhilfe zu schaffen, ist die Freifahrfunktion, das sogenannte Override, vorgesehen. Hier kann eine Bedienperson das Lichtgitter 1 manuell deaktivieren um das nichtsicherheitskritische Objekt aus dem Überwachungsbereich auszufahren. Da somit die Sicherungsfunktion des Lichtgitters 1 kurzfristig außer Kraft gesetzt ist, muss hier die Bedienperson darauf achten, dass keine Person in den Überwachungsbereich eintritt.

Je nach Applikation kann die Neigung des Lichtgitters 1 bei der Anordnung gemäß den Figuren 2 bis 5 variiert werden. Prinzipiell ist sogar eine Senkrechtstellung der Gehäuse 5, 8 des Lichtgitters 1 möglich. In diesem Fall können während der Einlaufphase und Auslaufphase jedoch die Vorder- und Hinterkante des nichtsicherheitskritischen Objekts nicht mehr durch eine stetig wachsende beziehungsweise fallende Anzahl von unterbrochenen Strahlachsen detektiert werden. In diesem Fall kann das Einlaufen der Vorder- und Hinterkante nur durch Überwachen der Durchlaufzeit in Kombination mit dem Kriterium, dass nur eine maximale Zahl von Strahlachsen lückenlos unterbrochen sein darf, kontrolliert werden.

### Bezugszeichenliste

- (1): Lichtgitter
- (2): Sendelichtstrahlen
- (3): Sender
- (4): Steuereinheit
- (5): Gehäuse
- (6): Empfänger
- (7): Auswerteeinheit
- (8): Gehäuse
- (9): Förderstrecke
- (10): Rolle

## Patentansprüche

1. Lichtgitter zur Erfassung von Objekten in einem Überwachungsbereich, mit einer Anzahl von Strahlachsen, welche jeweils von einem Sendelichtstrahlen (2) emittierenden Sender (3) und einem zugeordneten Empfänger (6) gebildet sind wobei die Längsachse des Lichtgitters um einen Neigungswinkel zur Vertikalen geneigt ist, wobei bei freiem Überwachungsbereich die Strahlachsen nicht unterbrochen sind und bei einem Objekteingriff im Überwachungsbereich wenigstens eine Strahlachse unterbrochen ist, und mit einer Auswerteeinheit, mittels derer bei Eindringen eines sicherheitskritischen Objekts in den Überwachungsbereich eine Objektmeldung generierbar ist, **dadurch gekennzeichnet, dass** in der Auswerteeinheit (7) ein nichtsicherheitskritisches Objekt bei Passieren des Überwachungsbereichs dadurch identifizierbar ist, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit (7) gespeicherte Objektmerkmale des nichtsicherheitskritischen Objekts erfüllt sind, wobei während der Einlaufphase die Vorderkante des nichtsicherheitskritischen Objekts in den Überwachungsbereich einläuft und während der Durchlaufphase das nichtsicherheitskritische Objekt in seiner gesamten Höhe erfasst wird, dass bei einem identifizierten nichtsicherheitskritischen Objekt in der Auswerteeinheit (7) ein Mutingsignal generiert wird, und dass durch die Erfassung des nichtsicherheitskritischen Objekts in den einzelnen Muting-Phasen das Abschalten des Mutingsignals zeitaufgelöst erfolgt.

2. Lichtgitter nach Anspruch 1, **dadurch gekennzeichnet, dass** das nichtsicherheitskritische Objekt zusätzlich während einer Auslaufphase als weiterer Muting-Phase erfasst wird, wobei während der Auslaufphase die Hinterkante des nichtsicherheitskritischen Objekts aus dem Überwachungsbereich ausläuft, und wobei in der Auswerteeinheit (7) spezifische Objektmerkmale für diese Auslaufphase gespeichert sind.

3. Lichtgitter nach Anspruch 1, **dadurch gekennzeichnet, dass** die Vorderkante des nichtsicherheitskritischen Objekts durch eine stetig ansteigende Anzahl unterbrochener Strahlachsen detektierbar ist.

4. Lichtgitter nach Anspruch 3, **dadurch gekennzeichnet, dass** während der Einlaufphase zusätzlich die Lage der Ober- oder Unterkante des nichtsicherheitskritischen Objekts überwacht wird.

5. Lichtgitter nach einem der Ansprüche 1 bis 4, **dadurch gekennzeichnet, dass** die Hinterkante des nichtsicherheitskritischen Objekts durch eine stetig fallende Anzahl unterbrochener Strahlachsen detektierbar ist.

6. Lichtgitter nach Anspruch 5, **dadurch gekennzeichnet, dass** während der Auslaufphase zusätzlich die Lage der Ober- oder Unterkante des nichtsicherheitskritischen Objekts überwacht wird.

7. Lichtgitter nach einem der Ansprüche 1 bis 6, **dadurch gekennzeichnet, dass** während der Ein- und/oder Auslaufphase die Höhe des nichtsicherheitskritischen Objekts überprüft wird, indem in der Auswerteeinheit (7) überwacht wird, dass die Anzahl der unterbrochenen Strahlachsen einen Maximalwert nicht übersteigt.

8. Lichtgitter nach einem der Ansprüche 1 bis 7, **dadurch gekennzeichnet, dass** von diesem während der Durchlaufphase das nichtsicherheitskritische Objekt in seiner gesamten Höhe erfasst wird, wobei diese Höhe in der Auswerteeinheit (7) anhand der Anzahl der unterbrochenen Strahlachsen überwacht wird, wobei die Anzahl der unterbrochenen Strahlachsen als Messwerte mit einem Sollwert verglichen wird und die Höhe des nichtsicherheitskritischen Objekts als erkannt gilt, wenn die registrierten Messwerte mit dem Sollwert innerhalb vorgegebener Toleranzgrenzen übereinstimmen.

9. Lichtgitter nach Anspruch 8, **dadurch gekennzeichnet, dass** während der Durchlaufphase zusätzlich überwacht wird, ob durch das nichtsicherheitskritische Objekt eine lückenlose Folge unterbrochener Strahlachsen vorliegt, und dass in der Auswerteeinheit (7) während der Durchlaufphase zusätzlich die Lage der Ober- und/oder Unterkante des nichtsicherheitskritischen Objekts überwacht wird.

10. Lichtgitter nach einem der Ansprüche 1 bis 9, **dadurch gekennzeichnet, dass** in wenigstens einer der Muting-Phasen die Geschwindigkeit des nichtsicherheitskritischen Objekts überwacht wird, wobei hierzu in der Auswerteeinheit (7) eine Durchlaufzeit des nichtsicherheitskritischen Objekts als Sollwert abgespeichert ist.

11. Lichtgitter nach einem der Ansprüche 1 bis 10, **dadurch gekennzeichnet, dass** die Bewegungsrichtung des nichtsicherheitskritischen Objekts aus dem zeitlichen Verlauf der unterbrochenen Strahlachsen in der Einlauf- und/oder Auslaufphase ermittelbar ist.

12. Lichtgitter nach einem der Ansprüche 1 bis 11, **dadurch gekennzeichnet, dass** dieses durch das Mutingsignal stumm geschaltet werden kann, so dass bei einer Objekterkennung die Objektmeldung unterdrückt wird, und dass das Mutingsignal abgeschaltet wird, wenn nicht in wenigstens einer der Muting-Phasen ein nichtsicherheitskritisches Objekt erkannt wird.

13. Lichtgitter nach Anspruch 12, **dadurch gekennzeichnet, dass** bei Registrieren einer Abweichung von den gespeicherten Objektmerkmalen während der Detektion eines nichtsicherheitskritischen Objekts während einer Muting-Phase in der Auswerteeinheit (7) ein Fehlersignal generiert wird, wodurch das Mutingsignal aufgehoben wird.

14. Lichtgitter nach Anspruch 13, **dadurch gekennzeichnet, dass** dieses bei einer Aufhebung des Mutingsignals manuell deaktivierbar ist um ein im Überwachungsbereich befindliches nichtsicherheitskritisches Objekt aus diesem auszufahren.

15. Lichtgitter nach einem der Ansprüche 1 bis 14, **dadurch gekennzeichnet, dass** dieses ein Sicherheitssensor ist, mittels dessen ein Gefahrenbereich an einem Arbeitsmittel überwacht wird.

16. Lichtgitter nach Anspruch 15, **dadurch gekennzeichnet, dass** das Arbeitsmittel durch eine Objektmeldung abgeschaltet wird.

17. Lichtgitter nach einem der Ansprüche 1 bis 16, **dadurch gekennzeichnet, dass** die Auswerteeinheit (7) einen redundanten Aufbau mit zwei sich gegenseitig zyklisch überprüfenden Rechnereinheiten aufweist.

## Claims

1. A light grid for detecting objects in a surveillance area, having a number of beam axes which are each formed by a transmitter (3) emitting transmitted light beams (2) and an associated receiver (6), the longitudinal axis of the light grid being inclined by an angle of inclination relative to the vertical, the beam axes not being broken when the surveillance area is free, and at least one beam axis being broken in the surveillance area in case of an object intrusion, and having an evaluation unit, by means of which an object message can be generated if a security-critical object penetrates into the surveillance area, **characterised in that** a non-security-critical object can be identified in the evaluation unit (7) as it passes through the surveillance area, **in that**, during at least one entry phase and one passage phase, the beam axes broken by the non-safety-critical object are registered as different muting phases and using these elements, the system checks whether specific object features of the non-safety-critical object which are stored in the evaluation unit (7) and are specific for the entry phase and the passage phase are fulfilled, the front edge of the non-safety-critical object entering the surveillance area during the entry phase and the entire height of the non-safety-critical object being detected during the passage phase, **in that** a muting signal is generated in the evaluation unit (7) in the case of an identified non-safety-critical object, and **in that** the muting signal is switched off in a time-resolved manner by the detection of the non-safety-critical object in the individual muting phases.

2. The light grid according to claim 1, **characterised in that** the non-safety-critical object is additionally detected during a phase-out phase as a third muting phase, the rear edge of the non-safety-critical object leaving the surveillance area during the phase-out phase, and specific object features for this phase-out phase being stored in the evaluation unit (7).

3. The light grid according to claim 1, **characterised in that** the front edge of the non-safety-critical object can be detected by a continuously increasing number of broken beam axes.

4. The light grid according to claim 3, **characterised in that** during the entry phase the position of the upper or lower edge of the non-safety-critical object is additionally monitored.

5. The light grid according to one of claims 1 to 4, **characterised in that** the trailing edge of the non-safety-critical object can be detected by a continuously decreasing number of broken beam axes.

6. The light grid according to claim 5, **characterised in that** during the exit phase the position of the upper or lower edge of the non-safety-critical object is additionally monitored.

7. The light grid according to one of claims 1 to 6, **characterised in that** during the entry and/or exit phase the height of the non-safety-critical object is checked by surveillance in the evaluation unit (7) that the number of broken beam axes does not exceed a maximum value

8. The light grid according to one of claims 1 to 7, **characterised in that** the non-safety-critical object is detected by said light grid during the passage phase over its entire height, this height being monitored in the evaluation unit (7) on the basis of the number of broken beam axes, the number of broken beam axes being compared as measured values with a desired value and the height of the non-safety-critical object being regarded as recognised if the registered measured values correspond to the desired value within predetermined tolerance limits.

9. The light grid according to claim 8, **characterised in that**, during the passage phase, the system further monitors whether there is a complete sequence of broken beam axes through the non-safety-critical object and **in that**, during the passage phase, the position of the upper and/or lower edge of the non-safety-critical object is additionally monitored in the evaluation unit (7).

10. The light grid in accordance with one of claims 1 to 9, **characterised in that** the speed of the non-safety-critical object is monitored in at least one of the muting phases, a passage time of the non-safety-critical object being stored in the evaluation unit (7) as a desired value for this purpose.

11. The light grid according to one of claims 1 to 10, **characterised in that** the direction of movement of the non-safety-critical object can be determined from the temporal course of the broken beam axes in the entry and/or exit phase.

12. The light grid according to one of claims 1 to 11, **characterised in that** this can be muted by the muting signal so that the object message is suppressed upon object detection, and that the muting signal is switched off if a non-safety-critical object is not detected in at least one of the muting phases.

13. The light grid according to claim 12, **characterised in that** an error signal is generated in the evaluation unit (7) when a deviation from the stored object characteristics is registered during the detection of a non-safety-critical object during a muting phase, which cancels the muting signal.

14. The light grid according to claim 13, **characterised in that** it can be manually deactivated when the muting signal is cancelled in order to remove a non-safety-critical object located in the surveillance area.

15. The light grid according to one of claims 1 to 14, **characterised in that** it consists of a safety sensor by means of which a danger area on work equipment is monitored.

16. The light grid according to claim 15, **characterised in that** said work equipment is switched off by an object message.

17. The light grid according to one of claims 1 to 16, **characterised in that** the evaluation unit (7) has a redundant structure with two computer units checking themselves cyclically on the input side.

## Revendications

1. Barrière lumineuse pour la détection d'objets dans une zone de surveillance, comportant un certain nombre d'axes de faisceaux formés chacun par un émetteur (3) émettant des faisceaux lumineux transmis (2) et un récepteur (6) associé, l'axe longitudinal de la barrière lumineuse étant incliné d'un angle d'inclinaison par rapport à la verticale, les axes de faisceaux n'étant pas interrompus lorsque la zone de surveillance est libre, et au moins un axe de faisceau étant interrompu dans la zone de surveillance en cas d'intrusion d'un objet, et comportant une unité d'évaluation au moyen de laquelle un message d'objet peut être généré si un objet critique pour la sécurité pénètre dans la zone de surveillance, **caractérisé en ce qu'**un objet non critique pour la sécurité peut être identifié dans l'unité d'évaluation (7) lorsqu'il traverse la zone de surveillance, pendant au moins une phase d'entrée et une phase de passage, les axes du faisceau interrompu par l'objet non critique pour la sécurité sont enregistrés comme différentes phases de mise en sourdine et, à l'aide de ces éléments, le système vérifie si les caractéristiques spécifiques de l'objet non critique pour la sécurité qui sont enregistrées dans l'unité d'évaluation (7) et spécifiques pour la phase d'entrée et la phase de passage sont remplies, le bord avant de l'objet non critique pour la sécurité pénétrant dans la zone de surveillance pendant la phase d'entrée et la hauteur totale de l'objet non critique pour la sécurité étant détectés pendant la phase de passage, **en ce qu'**un signal de mise en sourdine est généré dans l'unité d'évaluation (7) pour un objet non critique identifié et que le signal de mise en sourdine est coupé dans un délai déterminé par la détection de l'objet non critique pour la sécurité pendant les phases de mise en sourdine individuelles.

2. Barrière lumineuse selon la revendication 1, **caractérisée en ce que** l'objet non critique pour la sécurité est en outre détecté pendant une phase de sortie progressive comme troisième phase de mise en sourdine, le bord arrière de l'objet non critique pour la sécurité quittant la zone de surveillance pendant la phase de sortie progressive, et les caractéristiques spécifiques de l'objet pour cette phase de sortie progressive étant enregistrées dans l'unité d'évaluation (7).

3. Barrière lumineuse selon la revendication 1, **caractérisée en ce que** le bord avant de l'objet non critique pour la sécurité peut être détecté par un nombre sans cesse croissant d'axes de faisceau interrompus.

4. Barrière lumineuse selon la revendication 3, **caractérisée en ce que** pendant la phase d'entrée, la position du bord supérieur ou inférieur de l'objet non critique pour la sécurité est également surveillée.

5. Barrière lumineuse selon l'une des revendications 1 à 4, **caractérisée en ce que** le bord de fuite de l'objet non critique pour la sécurité peut être détecté par un nombre décroissant continu d'axes de faisceau interrompus.

6. Barrière lumineuse selon la revendication 5, **caractérisé en ce que** pendant la phase de sortie, la position du bord supérieur ou inférieur de l'objet non critique pour la sécurité est également surveillée.

7. Barrière lumineuse selon l'une des revendications 1 à 6, **caractérisée en ce que** pendant la phase d'entrée et/ou de sortie, la hauteur de l'objet non critique pour la sécurité est contrôlée par un système de surveillance dans l'unité d'évaluation (7) afin que le nombre d'axes de faisceau interrompus ne dépasse pas une valeur maximale.

8. Barrière lumineuse selon l'une des revendications 1 à 7, **caractérisée en ce que** l'objet non critique pour la sécurité est détecté par ladite barrière lumineuse pendant la phase de passage sur toute sa hauteur, cette hauteur étant surveillée dans l'unité d'évaluation (7) sur la base du nombre d'axes de faisceau interrompus, le nombre d'axes de faisceau interrompus étant comparé comme valeurs mesurées à une valeur souhaitée et la hauteur de l'objet non critique étant considérée comme reconnue lorsque les valeurs de mesure enregistrées correspondent à la valeur souhaitée dans des limites de tolérance prédéterminées.

9. Barrière lumineuse selon la revendication 8, **caractérisée en ce que**, pendant la phase de passage, le système surveille en outre s'il y a une séquence complète d'axes de faisceau interrompus à travers l'objet non critique pour la sécurité et **en ce que**, pendant la phase de passage, la position du bord supérieur et/ou inférieur de l'objet non critique pour la sécurité est également surveillée dans l'unité d'évaluation (7).

10. Barrière lumineuse selon l'une des revendications 1 à 9, **caractérisée en ce que** la vitesse de l'objet non critique pour la sécurité est surveillée dans au moins une des phases de mise en sourdine, un temps de passage de l'objet non critique pour la sécurité étant enregistré comme valeur souhaitée dans l'unité d'évaluation (7) à cet effet.

11. Barrière lumineuse selon l'une des revendications 1 à 10, **caractérisée en ce que** la direction de déplacement de l'objet non critique pour la sécurité peut être déterminée à partir de la trajectoire temporelle des axes de faisceau interrompus dans la phase d'entrée et/ou de sortie.

12. Barrière lumineuse selon l'une des revendications 1 à 11, **caractérisée en ce qu'**elle peut être mise en sourdine par le signal d'inhibition de sorte que le message d'objet est supprimé lors de la détection d'objet et que le signal d'inhibition est désactivé si un objet non critique pour la sécurité n'est pas détecté dans au moins une des phases de mise en sourdine.

13. Barrière lumineuse selon la revendication 12, **caractérisée en ce qu'**un signal d'erreur est généré dans l'unité d'évaluation (7) lorsqu'un écart par rapport aux caractéristiques de l'objet mémorisé est enregistré pendant la détection d'un objet non critique pour la sécurité pendant une phase de mise en sourdine, qui annule le signal de mise en sourdine.

14. Barrière lumineuse selon la revendication 13, **caractérisée en ce qu'**elle peut être désactivée manuellement lorsque le signal de mise en sourdine est annulé afin de retirer un objet non critique pour la sécurité situé dans la zone de surveillance.

15. Barrière lumineuse selon l'une des revendications 1 à 14, **caractérisée en ce qu'**elle est constituée d'un capteur de sécurité au moyen duquel une zone dangereuse est surveillée sur des instruments de travail.

16. Barrière lumineuse selon la revendication 15, **caractérisée en ce que** les instruments de travail sont désactivés par un message objet.

17. Barrière lumineuse selon l'une des revendications 1 à 16, **caractérisé en ce que** l'unité d'évaluation (7) présente une structure redondante avec deux unités informatiques se contrôlant de manière cyclique du côté entrée.
